Europäisches Patentamt

European Patent Office

Office européen des brevets

(11) Publication number: **0 169 028 B1**

# EUROPEAN PATENT SPECIFICATION

(45) Date of publication of patent specification: **06.11.91**

(51) Int. Cl.⁵: **H02J 13/00**, H01H 9/16, G08C 19/12

(21) Application number: **85304943.5**

(22) Date of filing: **10.07.85**

(54) **Control system for remote control of an electrical power supply switching circuit.**

(30) Priority: **11.07.84 GB 8417655**

(43) Date of publication of application:
**22.01.86 Bulletin 86/04**

(45) Publication of the grant of the patent:
**06.11.91 Bulletin 91/45**

(84) Designated Contracting States:
**BE DE FR GB IT LU NL**

(56) References cited:
EP-A- 0 082 080
DE-A- 3 111 107
FR-A- 1 137 786
FR-A- 2 523 779
US-A- 3 818 241

(73) Proprietor: **GEC AEROSPACE LIMITED**
**Abbey Works, Titchfield**
**Fareham, Hampshire PO14 4QA(GB)**

(72) Inventor: **Beddoe, Stanley**
**6 Martin Avenue Stubbington**
**Fareham Hampshire(GB)**

(74) Representative: **Cockayne, Gillian et al**
**The General Electric Company plc Central**
**Patent Dept. (Chelmsford Office) Marconi**
**Research Centre West Hanningfield Road**
**Great Baddow, Chelmsford Essex CM2**
**8HN(GB)**

## Description

This invention relates to electrical power control systems and relates more specifically to such systems of the kind in which one or more satellite power supply switching circuits located respectively in close proximity to the electrical loads to be controlled thereby are operatively controlled and/or monitored from a remote power control unit.

It is known from European Patent Application No. EP-A-0082080 to provide an electrical power control system of the above kind in which the or each satellite power control unit is operatively controlled by a pulse train signal of constant frequency arranged to be transmitted to it from the remote power control unit over a first data link and in which a further data link is provided for transmitting monitoring signals back from the power supply switching circuit to the remote power control unit.

Attention is also directed to German Patent Application No. DE-A-3111107 and French Patent Application No. FR-A-2523779. The former discloses a current-to-frequency converter for remote monitoring of the current supplied from a remote power supply through an optical data link. The latter gives an example of a relay remotely controlled by the presence or absence of a high frequency signal transmitted over a power line.

According to the present invention however, there is provided an electrical power control system comprising one or more satellite power supply switching circuits located in close proximity to electrical loads to be controlled thereby and operatively controlled and/or monitored from a remote power control unit, the or each satellite power supply switching circuit being operatively controlled by a pulse train signal of low power and constant frequency arranged to be transmitted to it from the remote power control unit over a first data link and the or each satellite power supply switching circuit comprising means for producing a status signal which is arranged to be transmitted back to the remote switching control unit for monitoring and control purposes over a further data link, characterised in that the arrival and continuing presence of the pulse train signal transmitted to the satellite power supply switching circuit over the first data link and which is rectified by rectifying means causes a normally "OFF" power switch to be switched "ON" by the rectified output from the rectifying means in order to energise the load from a power supply, and that the or each satellite power supply switching circuit comprises a current-to-frequency converter which produces a status signal the frequency of which is proportional to the load current supplied through the power supply switching circuit.

The control system according to the present invention enables the satellite power circuit to be operatively controlled (switched "on and "off") from the power control unit which may comprise a suitably programmed micro-computer. The controlling operation is without the need for complex data links between the power supply circuit and the remote control unit whilst retaining the requisite degree of immunity to false signals (e.g. EMI) by virtue of the twisted pair cable data links.

The supply switching circuit may be of the MOSFET type which requires very little control power.

The remote power control unit has complete control over the satellite power supply switching circuit and the load current since it provides the control signal/power and can invoke a gradual increase in the load supply so as to prevent electrical transient generation. The power control unit also has by virtue of frequency/current related status information received back over the further data link complete information on the magnitude of the load current flowing in the satellite power supply circuit and this information can readily be provided in a digital compatible form and processed to give an overcurrent characteristic so as to protect the power supply circuit and the power cabling etc. under overload conditions. The system may also be processor compatible and provided with fail-safe facilities.

As previously mentioned the remote control unit may be controlled by a computer so that the pulse train signal for controlling the satellite power supply circuit may be generated in response to a power control sub-system program and the status information may be examined by an embedded program in the power control unit microprocessor whereby the control signal may be discontinued or it may be pulsed for control purposes.

By way of example the present invention will now be described with reference to the accompanying single-figure drawing which shows a block schematic diagram of a power control system according to the present invention.

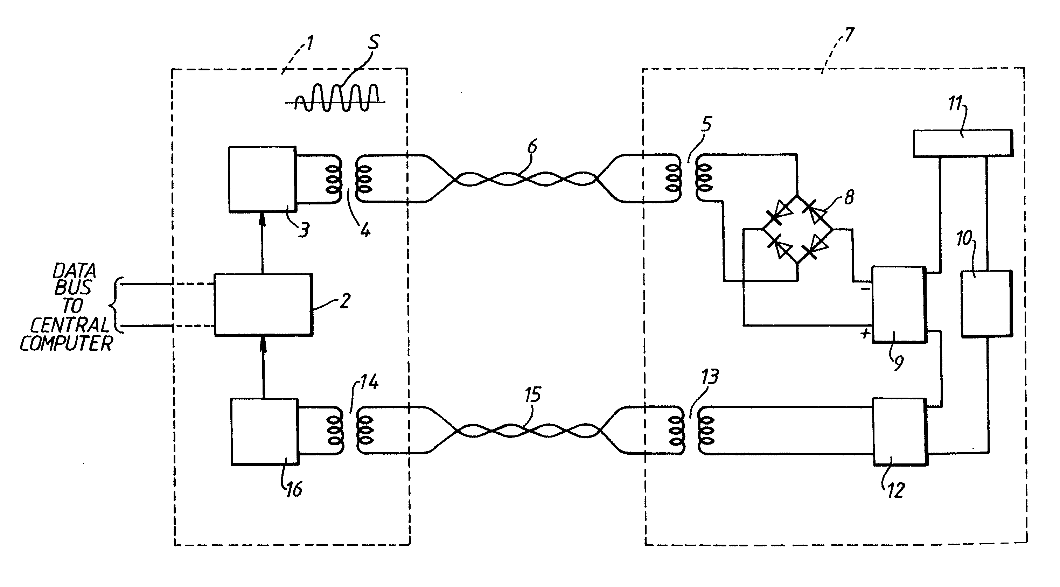

Referring to the drawing the power control system comprises a sub-system power control unit 1 which comprises a micro-computer 2 which is coupled through a buffer 3 and over a data link comprising balanced power transformers 4 and 5 and a twisted pair cable 6 to a power supply switching circuit 7.

The power supply switching circuit 7 in the present embodiment is arranged to be controlled by means of a constant frequency continuous sinusoidal signal S which is derived from the power control unit 1 and which may be produced in response to a program for satellite power switching control purposes stored in the micro-computer 2 of the power control unit. This signal S of constant frequency and of very low power is transmitted over the data link to the power supply switching circuit 7 where it is rectified by means of a rectifier 8 the output from which is fed to a power switch 9 which is of the MOSFET type. The arrival and continuing presence of the signal S causes the power switch 9 to be switched "on" so that power can be supplied to a load 10 from a d.c. supply 11. The load circuit comprises a current-to-frequency converter 12 which may comprise an inverter oscillator and which produces a signal the frequency of which is proportional to the load current (i.e. the current supplied through the power switch). This signal which provides a power status signal is transmitted back to the power control unit 1 through balanced transformers 13 and 14 and a twisted pair data link 15. The status signal arriving at the power control unit may be digitised by a digitiser 16 and the output from which is fed to the micro-computer 2. This digital status information fed to the micro-computer may be examined in accordance with a stored program and as a consequence the control exercised by the power control unit may be modified. Under certain conditions the control signal S may be removed from the data link 6 to disable the satellite power circuit, as for example under overload conditions. However, it can be arranged that the power supply switching circuit will be in the "ON" condition in the absence of the control signal and turned "OFF" by the control signal S, if this is required for fail-safe purposes. This will require a power device configuration in which the control input produces a voltage which disables the control gate and in which the control logic is inverted.

## Claims

1. An electrical power control system comprising one or more satellite power supply switching circuits (7) located in close proximity to electrical loads (10) to be controlled thereby and operatively controlled and/or monitored from a remote power control unit (1), the or each satellite power supply switching circuit (7) being operatively controlled by a pulse train signal of low power and constant frequency arranged to be transmitted to it from the remote power control unit over a first data link (6) and the or each satellite power supply switching circuit (7) comprising means (12) for producing a status signal which is arranged to be transmitted back to the remote switching control unit (1) for monitoring and control purposes over a further data link (15), characterised in that the arrival and continuing presence of the pulse train signal(S) transmitted to the satellite power supply switching circuit (7) over the first data link (6) and which is rectified by rectifying means (8) causes a power switch (9) to be switched in a predetermined state "ON" or "OFF" by the rectified output from the rectifying means (8) in order to energize the load (10) from a power supply (11), that the or each satellite power supply switching circuit (7) comprises a current-to-frequency converter which produces a status signal the frequency of which is proportional to the load current supplied through the power supply switching circuit.

2. An electrical power control system as claimed in claim 1, characterised in that the data links (6, 15) include balancing and isolating transformers (4, 5 and 13, 14).

3. An electrical power control system as claimed in any preceding claim, characterised in that the data links include twisted cable pairs (6, 15).

4. An electrical power control system as claimed in any preceding claim, characterised in that the power control unit (1) comprises a suitably programmed micro-computer (2) the output from which operatively controls the satellite power supply switching circuit.

5. An electrical power control system as claimed in any preceding claim, characterised in that the rectified signal from the rectifying means (8) is applied to a power switch (9) of the MOSFET type.

## Revendications

1. Système de commande d'alimentation électrique comprenant un ou plusieurs circuits de commutation d'alimentation électrique satellites (7) disposés à proximité étroite de charges électriques (10) devant être commandées par ceux-ci, et fonctionnellement commandés et, ou bien, contrôlés depuis une unité de commande d'alimentation électrique située à distance (1), le circuit ou chaque circuit de commutation d'alimentation électrique satellite (7) étant fonctionnellement commandé par un signal de train d'impulsions de faible puissance et de fréquence constante destiné à lui être transmis depuis l'unité de commande d'alimentation électrique située à distance via une première liaison de données (6), et le circuit ou chaque circuit de commutation d'alimentation électrique satellite (7) comprenant un moyen (12) servant à produire un signal d'état qui est destiné à être retransmis à l'unité de commande de commutation située à distance (1) dans des buts de contrôle et de commande via une autre liaison de données (15), caractérisé en ce que l'arrivée et la continuation de la présence du signal (ou de signaux) signaux de train d'impulsions émis à destination du circuit de commutation d'alimentation électrique satellite (7) via la première liaison de données (6) et qui est redressé par un moyen de redressement (8) fait qu'un commutateur de puissance (9) commute dans un état prédéterminé, "fermé" ou "ouvert", sous l'action du signal de sortie redressé venant du moyen de redressement (8) afin d'exciter la charge (10) à partir d'une alimentation électrique (11), et en ce que le circuit ou chaque circuit de commutation d'alimentation électrique satellite (7) comprend un convertisseur courant fréquence qui produit un signal d'état dont la fréquence est proportionnelle au courant de charge fourni par l'intermédiaire du circuit de commutation d'alimentation électrique.

2. Système de commande d'alimentation électrique selon la revendication 1, caractérisé en ce que les liaisons de données (6, 15) comportent des transformateurs symétriques et d'isolation (4, 5 et 13, 14).

3. Système de commande d'alimentation électrique selon l'une quelconque des revendications précédentes, caractérisé en ce que les liaisons de données comportent des paires de câbles torsadés (6, 15).

4. Système de commande d'alimentation électrique selon l'une quelconque des revendications précédentes, caractérisé en ce que l'unité de commande d'alimentation électrique (1) comprend un micro-ordinateur programmé de façon appropriée (2) dont le signal de sortie commande fonctionnellement le circuit de commutation d'alimentation électrique satellite.

5. Système de commande d'alimentation électrique selon l'une quelconque des revendications précédentes, caractérisé en ce que le signal redressé venant du moyen de redressement (8) est appliqué à un commutateur de puissance (9) du type MOSFET.

**Patentansprüche**

1. Elektrisches Leistungssteuersystem, das eine oder mehrere Satelliten-Leistungsversorgungs-Schaltkreise (7) umfaßt, die in enger Nachbarschaft zu dadurch zu steuernden elektrischen Lasten (10) angeordnet sind, welche wirksam von einer Fernleistungs-Steuereinheit (1) gesteuert und/oder überwacht werden, wobei der oder jeder Satelliten-Leistungsversorgungs-Schaltkreis (7) wirksam durch eine Impulsreihensignal geringer Leistung und konstanter Frequenz gesteuert ist, das angeordnet ist, diesem von der Fernleistungssteuereinheit über eine erste Datenverbindung (6) zugesendet zu werden, und der oder jeder Satelliten-Leistungsversorgungs-Schaltkreis (7) Mittel (12) umfaßt zur Erzeugung eines Statussignals, das ausgelegt ist, zu Überwachungs- und Steuerzwecken über eine weitere Datenverbindung (15) zurück zu der Fernschaltungssteuereinheit (1) gesendet zu werden, dadurch gekennzeichnet, daß die Ankunft und anhaltende Gegenwart des zu dem Satelliten-Leistungsversorgungs-Schaltkreis (7) über die erste Datenverbindung (6) gesendeten durch Gleichrichtermittel (8) gleichgerichteten Impulsreihensignals (S), einen Leistungsschalter (9) in einen vorbestimmten Zustand "EIN" oder "AUS" schalten läßt durch das gleichgerichtete Ausgangssignal vom Gleichrichtermittel (8), um die Last (10) von einer Leistungsversorgung (11) zu beaufschlagen, daß der oder jeder Satelliten-Leistungsversorgungs-Schaltkreis (7) einen Strom/Frequenz-Wandler umfaßt, der ein Statussignal erzeugt, dessen Frequenz proportional dem durch den Leistungsversorgungs-Schaltkreis zugeführten Laststrom ist.

2. Elektrisches Leistungssteuersystem nach Anspruch 1, dadurch gekennzeichnet, daß die Datenverbindungen (6, 15) Ausgleichs- und Trenntransformatoren (4, 5 und 13, 14) enthalten.

3. Elektrisches Leistungssteuersystem nach nach einem der vorangehenden Ansprüche, dadurch gekennzeichnet, daß die Datenverbindungen verdrillte Kabelpaare (6, 15) enthalten.

4. Elektrisches Leistungssteuersystem nach einem der vorangehenden Ansprüche, dadurch gekennzeichnet, daß die Leistungssteuereinheit (1) einen entsprechend programmierten Mikrocomputer (2) umfaßt, dessen Ausgangssignal wirksam den Satelliten-Leistungsversorgungs-Schaltkreis steuert.

5. Elektrisches Leistungssteuersystem nach einem der vorangehenden Ansprüche, dadurch gekennzeichnet, daß das gleichgerichtete Signal von dem Gleichrichtermittel (8) an einen Leistungsschalter (9) vom MOSFET-Typ angelegt ist.